# EUROPEAN PATENT APPLICATION

(11) **EP 2 733 953 A1**
(43) Date of publication of application: **21.05.2014**
(21) Application number: 13193435.8
(22) Date of filing: 19.11.2013
(51) Int. Cl.: H04N 21/234, G11B 27/034, H04N 19/00

(54) **Content compression system**

(30) Priority: 19.11.2012 IT MI20121969
(71) Applicant: Sky Italia S.R.L., 20138 Milano (IT)
(72) Inventor: Bertolotti, Massimo, 20138 Milano (IT)
(74) Representative: HOFFMANN EITLE

(57) **Abstract**

The present invention refers to a method for the composition of linear channels comprising at least two units of content, each unit of content comprising at least one among audio, video and data services, and in which the point in time corresponding to the start of the transmission of each unit of content is predetermined based on the channel composition information. The method comprises the steps of selecting (S10) at least two units of content based on the channel composition information, receiving (S20) the selected units of content from storing means, in which each one of the units of content has been previously stored utilising off-line encoding, and temporally aligning (S30), based on the channel composition information, the selected units of content so as to obtain the linear channel to be transmitted by broadcasting. An entity and a computer program are accordingly provided.

## Description

### BACKGROUND OF THE INVENTION

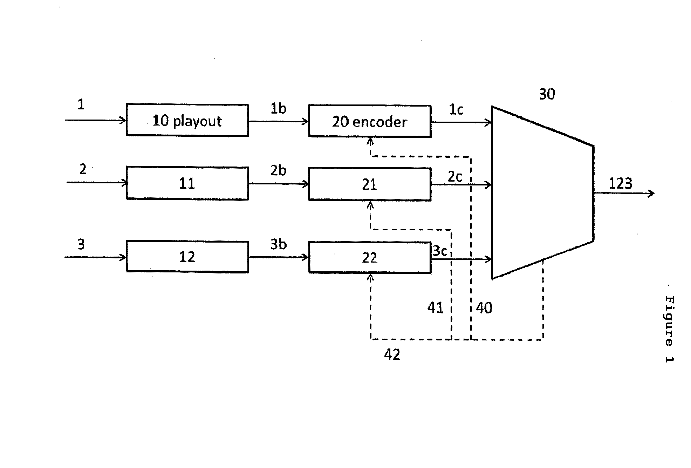

In systems for broadcasting channels such as television channels, a broadcaster establishes for one or more channels, the respective programme schedule consisting in a list of programmes to be transmitted at a given hour and on a given date. Each programme is constituted by or composed of one or more audio-visual (or audio-only) contents with which data can be associated. The contents are inserted on a list and each one is associated with an input from which the content is obtained (for example from a television studio or from a storage device) and with a specific date and time on/at which the content should be transmitted. Starting from the programme schedule, generating or modifying this list falls within the scope of activities also known by the term "playout". Playout thus comprises a detailed and precise technical representation of the sequence in which the contents should follow one after the other so that the television viewers can view them without interruptions. The playout is typically managed in a dynamic manner, especially in the presence of live events. For example, in the case in which a sports event such as a football game continues beyond the pre-established time, the playout must in fact be changed so that the next content can be rescheduled, thus preventing the sports event being broadcast from being cut off and interrupted. Figure 1 illustrates a system for managing one or more channels by a television broadcaster. For a first channel for example, the playout 10 is in charge of starting the broadcasting of the content at a predetermined instant of time, the content being supplied at the input 1. Depending upon the programme to be broadcast, a corresponding signal, selected or supplied by suitable (unillustrated) means, shall be supplied in the input port 1. The playout 10 controls the sequence of contents on the input port 1 so that the programmes are properly selected and distributed for the next processing procedures for the purposes of transmission. Specifically, the playout forwards a signal 1b to an encoder 20, the signal 1b corresponding to the content of the input 1. The encoder 20 carries out on-line compression of the content 1b so as to obtain a compressed signal 1c. Compression can be carried out by proprietary or standardised encoding, such as MPEG-2 or MPEG-4 AVC for example. The procedure can be repeated for more than one channel. In Figure 1, the input 2, the playout 11 and the encoder 21 represent corresponding processing procedures for a second channel, while the input 3, the playout 12 and the encoder 22 represent the corresponding processing procedures for a third channel. The three compressed channels are subsequently supplied to the input of a multiplexer 30, which processes them for the purpose of breaking them up into packets and bundling them in such a manner as to obtain a stream of information 123 that is suitable for transport to the user. For example, the contents 1b, 2d and 3b, each of which has been selected and composed by the respective playout, can be compressed by means of MPEG-2 encoding so as to obtain compressed contents 1c, 2c and 3c, respectively, and then processed by the multiplexer 30 so as to obtain a transport stream according to MPEG-2 specifications (see for example a transport stream TS according to the ITU-T H.220.0 standards).

The transport stream 123 is typically characterised by a predetermined, unmodifiable band (defined as bit rate, and directly or indirectly linked to the physical band of the final physical signal). With the aim of optimising the use of the band, it is possible to insert elements that are capable of controlling the encoding parameters of the encoders 20, 21 and 22, so that the bit rate (that is, the level of compression) is dynamically adapted and distributed among the various channels in a given instant or for a given interval of time. For example, in the case in which it is possible to achieve, within a given interval of time, compression of good quality of a static content 1b utilising a low bit rate, it shall be possible, at least for the same interval of time, to allocate a higher bit rate to one of the other contents 2b and 3b. This possibility is schematically represented by the dashed lines 40, 41 and 42 symbolising a feedback of sorts affecting the encoders 20, 21 22 and generated, by way of example, by the multiplexer 30 while it is bundling the various compressed contents.

A broadcaster typically also transmits live channels within its programme schedule. The system illustrated in Figure 1, as known to the inventors, was developed to manage the simultaneous presence of pre-recorded contents and live contents. However, the presence of live contents requires encoding to be performed in reasonably rapid periods of time. Therefore, the compression factor cannot be particularly high, as this would require various processing procedures regarding the signal and quality checks that cannot be done in real time. Yet the use of feedbacks 40, 41 and 42 as described hereinabove makes it possible to optimise the quality for the various channels/contents, efficiently utilising the entire band available to the transport stream 123. For this reason, the system shown in Figure 1 is commonly accepted as an optimal solution for transmitting television channels.

Among other factors, the present invention is based, on recognition of the problem that in spite of its being commonly accepted as optimal, the system appearing in Figure 1 is affected by numerous drawbacks, including for example the fact that it is not possible to use the available bandwidth to the fullest extent, for a given transport stream 123. Moreover, the known system requires considerable processing resources, especially when a given content, especially if it is not live content, must be transmitted on a number of channels or re-transmitted in different instants of time on the same channel and/or on different channels.

### SUMMARY OF THE INVENTION

Therefore, the object of the present invention is to overcome the problems and drawbacks present in the state of the art such as those stated hereinabove.

Among other recognised issues, the present invention is based on the fact that it is possible to improve the levels of consumption of resources further, not only of the band available to the stream, by adopting an off-line, rather than an on-line compression system and by reversing the selecting and encoding steps for non-live content, that is, for contents that are available well in advance. According to one example, the encoding typical of non-linear channels, such as the encoding used for off-line compression of contents for Video On Demand (VOD), can be advantageously utilised for off-line encoding.

More specifically, a first aspect of the invention comprises a method for the composition of linear channels, a linear channel comprising at least two units of content, each unit of content comprising at least one among audio, video and data services, and in which the point in time corresponding to the start of the transmission of each unit of content is predetermined based on the channel composition information. The method comprises the steps of:
- selecting at least two units of content based on said channel composition information;
- receiving the selected units of content from storing means, in which each one of the units of content has been previously stored utilising off-line encoding;
- temporally aligning (30), based on the channel composition information, the selected units of content so as to obtain the linear channel to be transmitted by broadcasting.

According to a second aspect, the invention comprises an entity for the composition of linear channels, a linear channel comprising at least two units of content, each unit of content comprising at least one among audio, video and data services, and in which the point in time corresponding to the start of the transmission of each unit of content is predetermined based on the channel composition information. The entity further comprises:
- selection means configured so as to select at least two units of content based on the channel composition information;
- receiving means configured so as to receive the selected units of content from storing means in which each one of the units of content has been previously stored utilising off-line encoding;
- alignment means configured so as to temporally align, based on said channel composition information, the selected units of content so as to obtain the channel to be transmitted by broadcasting.

According to a second aspect, the invention comprises a computer program predisposed to execute, when said program is executed on a computer, one or more steps of the method according to the present invention.

### LIST OF FIGURES

Figure 1 is a block diagram of a system for composing and bundling the channels according to the state of the art, on which the present invention is based.
Figure 2 is a block diagram according to a first embodiment.
Figure 3 is a block diagram according to a variant of the first embodiment.
Figure 4 is a flowchart according to a second embodiment of the present invention.
Figure 5 is a flowchart according to a variant of the second embodiment of the present invention.

### DETAILED DESCRIPTION OF THE INVENTION

Before being made available to the television viewer (end user), television channels, and more generally any audio-visual content, must be compressed (for example in the MPEG mode), so as to minimise occupation of the band (in Mb/s). The processing of television services (channels) can be ascribed to two types of management. A first mode is aimed at generating contents for Video on Demand, where the contents are divided into events and each event is made available to the end user (television viewer), typically in a broadband mode or locally on a storage medium. The user can access any event in the Pay or Free mode and start viewing the event from the beginning, with the option of navigating (as is the case with DVDs) forwards/backwards through this event.

This approach is commercially called VOD, or Catch-up TV in cases where it refers to previously broadcast television programs. In this mode, the audio-visual contents (divided by events) are processed according to a procedure defined as "off-line processing", in which the preparation of the content takes place before the latter is made available to the end user. This approach typically offers the possibility to optimise compression, owing to the use of technologies that allow for the processing of the content a number of times, without time constraints, reaching average bit rates on the order of 40% lower than the compression in real time needed for live transmissions.

A second mode is currently the most widespread mode in the broadcast world and it comprises that contents be transmitted with a programme schedule (i.e., with a sequence of events/contents). In these modes, the channels are managed and compressed by a chain that comprises minimising the encoding times, reducing them to 1 or 2 seconds. Unlike the previous system, the systems must be rapid, so that the time dedicated to compression of the signal is not sufficient to ensure extreme performances comparable to those of off-line encoders.

Broadcasters typically adopt an infrastructure that comprises real-time encoders (for compression) for DTH channels transmitted by broadcasting and off-line for VOD content. This creates substantial inefficiency. In fact, channels such as documentary channels (for example the Discovery Channel) or movie channels (such as Sky Cinema) transmit contents that are in any case available prior to broadcasting, so that management with live systems does not optimise the occupied band. The proposed solution is a system that combines the quality offered by off-line compression (typical of non-linear contents) with the transmission of the signal to the end users in the linear (live) mode.

According to one example, the use of the compression typical of the VOD system is proposed, and thus the management of off-line compression, to compress the individual contents making up the programme schedule of a linear channel. According to a further example, the use of a chain is also comprised, the chain being enhanced with off-line compression to manage contents that are made available shortly before transmission, and which is activated for the contents that need to be processed urgently. Following compression, the contents are aligned (sequentially, one after the other) in a linear mode (based on the programme schedule of the channel) with the aim of maintaining the current user experience.

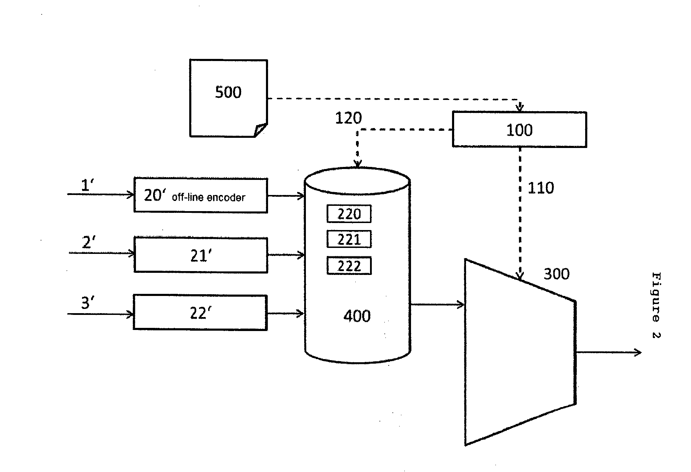

A first embodiment of the present invention is described with reference to Figure 2, which illustrates an entity for the composition of linear channels. The composition comprises determining the sequence of the units of content to be transmitted on a given channel based on the channel composition information. It is noted that the composition is carried out on the transmission side before the units of content are organised in packets suitable for transport and possibly multiplexed so as to be inserted in a transport stream.

A linear channel comprises at least two units of content and each unit of content comprises at least one among audio, video and data services corresponding to those services that can be used by the user. Moreover, the point in time corresponding to the start of the transmission of each unit of content is predetermined based on the channel composition information 500. The channel composition information 500 is information that associates an instant of time with each unit of content, for example a time and date, at which the corresponding unit of content should be reproduced and transmitted. The content information can thus be represented by a list in which the various units of content are listed together with the corresponding playing/transmission time, although other data structures are equally suited to representing them. Herein below the composition information shall also be referred to with the term "playlist" or "transmission playlist". It is noted that the composition information is available on the transmission side, that is, on the broadcaster side, and in one example, it is generated or modified automatically by one or more operators of the television broadcaster. However, the composition information is not available to the user and cannot be generated or modified by the user. Therefore, the composition information is distinct and different from the playlist on the user side, which can be managed by means of receiving means such as a set-top box. The playlist can be obtained starting from a television programme schedule, however it comprises in a detailed manner the technical data needed for transmission, such as the exact starting time of the transmission, a content identifier, etc. The unit of content is the smallest unit that can be referenced in the channel composition information. For example, the content unit can represent a single item on the playlist or the content referenced by a single item on the playlist. The content unit can be an entire television programme, such as a film, a telefilm or any recorded programme, or component parts of a television programme, such as the first part of a film, one or more commercials to be inserted in the break, and the second part of the same film. Therefore, a television programme can correspond to a single unit of content or a number of units of content (for example a film can be represented by a single unit of content or by several units of content, a first unit comprising the first part, a second comprising the commercial and a third, the second part). Content units refer to video, data and audio units that typically undergo two principal processing steps: a first compression step, which is particularly valid for the audio and video parts of the content (but also applicable to the data), and a second step in which the unit of content can be subdivided into elements containing less information, such as packets for example, and organised in a form suitable for transport to the receiver side. Referring to MPEG-2 standards, the compression step can be the step performed according to MPEG-2 compression characteristics and the second step can comprise processing the compressed content in a transport stream (MPEG-2 TS, as defined for example by the ITU-T H.222.0 standards). With reference to MPEG-4 standards, the compression step can be performed by means of MPEG-4 AVC encoding and the second step can comprise the processing of the compressed content in a transport stream as specified by the MPEG-4 or MPEG-2 standards. It is possible to adopt other standards or a combination thereof, as well as proprietary solutions. Referring to Figure 2, the units of content are represented by the units 220, 221 and 222 stored in a databank 400 already in a compressed form. In fact, the content units 220, 221 and 222 (preferably all of which representing non-live contents) have been obtained by performing off-line encoding on corresponding contents supplied on one or more of the inputs 1', 2'and 3', and subjected to corresponding encodings by means of encoders (encoders or compressors) 20', 21' and 22'. It is noted that only one of the off-line encoders 20', 21' and 22' is needed to compress the various content units. The use of a number of encoders can be advantageous when a number of contents have to be processed in parallel or in a short period of time. The point in time corresponding to the start of the transmission of each unit of content is predetermined based on the playlist, by the television network (or by an operator thereof), but not by the user. In fact, unlike non-linear channels - in which the starting time for transmission of content can be selected or at least partly controlled by the user - in linear channels, this is instead pre-established by the broadcaster and it cannot be modified by the user.

It is noted that an entity in the sense pertaining to the present invention, can be represented by a distributed system (for example by a set of interconnected devices, each of which realised in hardware and/or software) or by a single device realised in hardware and/or software.

The entity for the composition of linear channels further comprises selection means 100, receiving means 300 and alignment means 300 (which are schematically represented by the same unit in Figure 2, even though the receiving means and the alignment means can be equivalently implemented in separate units within the same entity).

The selection means 100 is configured so as to select at least two of the units of content 220, 221 and 222 based on the channel composition information 500. The selection can be carried out in real time, that is, shortly before the transmission starts, or it can be carried out well in advance. Given that the present invention is particularly advantageous in the presence of channels comprising non-live contents only, carrying out the selection well in advance, for example even several hours earlier, may be advantageous, to avoid overloading the system resources as the transmission time approaches. Selection is carried out based on the playlist 500: the units of content are identified so as to enable them to be sequentially composed or aligned subsequently on the channel as pre-established by the playlist. The content units thus selected are then received by means of receiving means 300 from storing means 400. In fact, each content unit 220, 221 and 222 has been previously stored in the storing means 400 utilising off-line encoding. The off-line encoding is such as to enable optimisation of compression, compared to the on-line compression typical of linear channels; for example, off-line encoding allows for processing the same content a number of times, without time constraints, and/or for performing quality checks on the image obtained at each one of these interactions, thus reaching average bit rates decidedly lower (even 40% lower) than the rates of on-line compression, at the expense of more resources being utilised and the time required for one compression process. An example of off-line encoding is the encoding typically utilised for Video on Demand (VOD) contents, in which the content to be compressed is in fact available far in advance, with respect to the transmission time thereof. With reference to MPEG-2 or MPEG-4 AVC compression, it is possible for example to process the AV (Audio/Video) content in a detailed manner and repeatedly for the purpose of identifying the best frame (for example, the frame most similar or akin) from which to predict the current one based on block prediction or motion compensation. In other words, without the time constraints of on-line encoding, it is then possible to take full advantage of the rules for predicting and testing the P- and B- frames according to the MPEG-2 and MPEG-4 standards or equivalents thereof. This makes it possible to obtain a high compression factor.

Reception from the storing means (for example from a databank, a storage device, etc.) can occur shortly before or well in advance of the transmission time; the lapse of time between reception from the database and transmission essentially depends on the buffer available inside the receiving means 300 or in the transmission system.

It is noted that the units of content have been previously stored utilising off-line encoding, which, as mentioned hereinabove, refers to the fact that the compression has been carried out prior to the creation of the playlist or at least before a playlist already available has been modified. In other words, the content must have already been compressed by means of off-line compression before that content is selected or at least received by the receiving means 300. In contrast, in the known techniques as represented in Figure 1, the content is compressed on line after having been selected from the playout and composed on the channel. In fact, the present invention is based, among other recognised issues, on the fact that an advantage exists - though unacknowledged in the state of the art - in giving up the flexibility of being able to vary on line the composition of a channel (as is instead permitted by the systems appearing in Figure 1, in which it is possible to vary the composition of a channel in real time or on line, compression being performed downstream of channel composition). By relinquishing this feature and performing off-line compression, rather than on-line compression, before the channel is composed, it is possible to achieve a series of advantageous technical effects. Specifically, a first effect can be found in the benefit derived from the reduction of the band occupied by the channel, owing to the use of audio and video signal compression systems that do not have time constraints. In fact, by means of complex algorithms and further compression steps, it is possible to achieve at least a 40% reduction of the band, compared to that which is possible by means of on-line compression systems for linear channels, while maintaining the same signal quality.

Off-line compression also offers the possibility to achieve a second important effect, that is, the effect of being able to check and qualify the results of the compression process prior to transmission. This check, which is performed automatically or manually, makes it possible to check for possible problems and anomalies, and therefore to repeat the procedure and obtain perfect results before this content can be received by the end client/user.

This effect offers a surprising advantage compared to live compression management, where eventual compression problems (e.g. macroblocking, audio glitches, etc.) can only be checked during reception of the channel on the part of the client/user. Therefore, a compression problem generates a direct problem on the service, which can only be solved a posteriori.

Once it has been checked, the material can be saved and queued/predisposed sequentially, based on the programme schedule of the channel on which it must be transmitted every time this content/material has been scheduled.

Considering that repetition of contents is high for time-shifted channels and non-live theme channels, this means that this content (which in the live compression scheme must be checked in real time every time it needs to be transmitted) is checked only once in the off-line scheme.

Therefore, if an event of the week on a given channel x is assumed to be inserted in a programme schedule twenty times, the content is managed only once rather than twenty times.

Associated with the fact that the same content can already be ready for use in a VOD catalogue, and considering the fact that the processes comprise off-line processing time, this factor generates a third effect, which is the reduction of the costs of the procedures, minimising the live procedures.

This effect can be exploited particularly in the presence of a channel comprising only non-live content units, that is, pre-recorded units available either well in advance or fairly early with respect to the scheduled broadcast time.

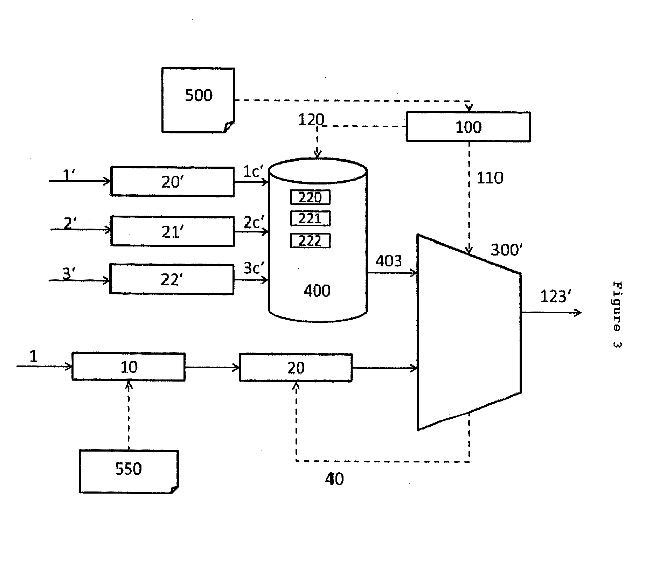

According to this embodiment, the entity further comprises alignment means 300 configured so as to temporally align, based on the channel composition information 500, the selected units of content 220, 221, and 222 so as to obtain the channel to be transmitted by broadcasting. The alignment is intended in a sequential sense, that is, the transmission of the second unit follows after the end of the transmission of the first unit at less than a given interval of time, which can for example be equal to zero seconds, to a pre-established duration or to the duration determined by one or more additional content units disposed therebetween. In the case that a number of channels are present, each content of a channel may then be combined together at a level of transport with the content of another channel within the same stream, as discussed hereinabove. It is noted that alignment does not imply that both content units of the same channel have to be collected at the same time and then aligned sequentially. All that is required is that the system be capable of identifying, that is, selecting the units of content to be composed in a given channel, so as to ensure that the latter are available for transmission at the pre-established time point. The alignment means 300 can be realised by means of hardware and/or software units that perform the sequential alignment for a given channel. According to another example, they can be integrated inside a pre-existing multiplexer in the channel composition system, such as the multiplexer 30 appearing in Figure 1. This aspect shall be illustrated in a variant of the present embodiment with reference to Figure 3.

The entity of the first embodiment can optionally comprise storing means 400 configured so as to store the units of content 220, 221 and 222, which can then be selected and aligned by the selection, receiving and alignment means. The units of content 220, 221 and 222 are obtained, as mentioned hereinabove, by off-line compression encoding represented for example by an encoder 20', at the input 1' of which the original contents corresponding to the compressed contents 220, 221 and 222 are supplied. The original contents can be in analogue or digital form and in this latter case, the contents can be supplied in a previously encoded form, but not yet optimised for transmission as provided for by the encoders 20'. The storing means 400, like the encoder 20', can be alternatively supplied externally of the entity discussed above and communicate with the latter through a communication network. It is also possible to provide for the use of a number of encoders in parallel 20', 21' and 22', and to each one of which there is supplied a content in the original format to be subjected to off-line compression. The use of a number of encoders may prove to be necessary in order to accelerate or parallelise the off-line compression of a number of contents, even though the invention works in the same manner in the presence of only one encoder or in the presence of previously encoded contents (in fact, it is necessary for there to be a content previously encoded off line, but the step of off-line compression is not essential).

The selection means can further comprise control means (not shown) for controlling and coordinating the receiving means and alignment means 300. The control means can also optionally control the storing means 400 so that the latter sends the selected units of content or they are configured so as to send a request to remote storing means to send content units to the receiving means 300.

An optional variant of the first embodiment shall now be illustrated with reference to the block diagram appearing in Figure 3, in which the components in common with the first embodiment appearing in Figure 2 are reproduced with the same reference marks (for the parts in common, reference is thus made to that which is discussed hereinabove). The unit 300' comprises receiving means and alignment means 300 as in the first embodiment and also means configured so as to multiplex a first linear channel composed starting from the precompressed units of content by means of off-line encoding 220, 221 and 222, with a second linear channel composed through live selection means 10 and on-line encoding means 20. Specifically, the live selection means 10 are configured so as to select, for the second linear channel (different from the first linear channel), at least one additional unit of content based on live channel composition information supplied at the second linear channel. The second linear channel composition information also comprises live contents (and is thus also called live channel composition information), unlike the contents of the first linear channel, the latter all being non-live and available in advance. Specifically, the second channel comprises at least one live content. The on-line encoding means 20 is instead configured so as to encode the at least one additional unit of content selected by the live selection means 10 by means of on-line encoding. In combination with the live channel composition information 550, the live selection means 10 comprises, in one example, a playout system capable of managing the composition of a channel comprising at least one live event. In one example, the playout comprises a list having a first live event, the duration of which is subject to change without prior notice, for example a sports event such as a tennis match or a football game. In this case, the incoming content on the input port 1 of the live selection means 10 shall be selected based on the information 550 with the possibility of checking or modifying in real time the content of this information 550. For example, in the case in which the live event is prolonged beyond the pre-established time, it is possible to modify the playout (for example, delay the starting time of the next programme, or substitute it with another programme or content), thereby preventing the sports event being aired from being interrupted. For this reason, on-line encoding is applied only after the content has been selected and it must be responsive to very precise time constraints. Optionally, the unit for treatment of linear channels 300' comprises means capable of controlling the encoder 20 and the encoding parameters thereof, for example through a feedback mechanism 40. Therefore, in the case in which the band of the transport stream 123' is fixed, the encoding parameters of the encoder 20 can be dynamically controlled (e.g. changed at given intervals of time) depending on the total band of the stream 123' and the bit rate of the first linear input channel 403 to the unit 300'.

In this manner, it is possible to optimise the band of a linear channel containing only non-live contents 403, performing off-line encoding before the contents are selected and composed on the channel 403, while optimising at the same time a second linear channel comprising a live event, selecting the live event according to the information 550 and encoding it after the selection through the encoder 20.

According to this variant, the invention combines the effects described above with reference to a channel comprising only non-live events with the efficiency of systems for the management of linear channels comprising live events.

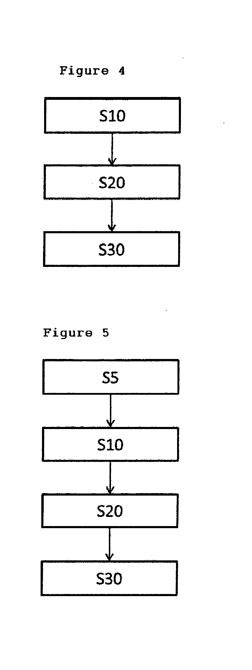

A method for the composition of linear channels according to a second embodiment of the present invention shall be described below with reference to Figure 4. The linear channel to which the method is applied comprises at least two units of content, each, in turn, comprising at least one among audio, video and data services, and in which the point in time corresponding to the start of the transmission of each unit of content is predetermined based on the channel composition information. Essentially, the same considerations stated with reference to the first embodiment hold for the linear channel and the components thereof. The method is also applied to a linear channel whose content units do not comprise live events. The method comprises a step S10 of selecting at least two units of content based on the channel composition information and then receiving in a step S20 the selected units of content from storing means in which each one of the units of content has been previously stored utilising off-line encoding. Off-line encoding is encoding for which there are no time constraints, unlike on-line encoding, as explained hereinabove. For example, off-line encoding enables the content to be processed a number of times with the aim of increasing its compression ratio. Particularly advantageous off-line encoding is the encoding typically utilised for VOD systems, in which the content is compressed without any time constraints (that is, in the time required to perform the compression) and on which a quality check can also be performed for the purpose of verifying that there is an optimal compression rate without negatively affecting the content quality. The units of content have been stored previously, that is, they have been stored before being selected based on the channel composition information and/or received in a previously compressed form. The method therefore comprises a step S30 of temporally aligning, based on the channel composition information, the selected units of content so as to obtain the linear channel to be transmitted by broadcasting. As previously described hereinabove, temporal alignment is intended in a sequential sense for the contents that are part of the same channel. Broadcasting of the channel can take place on any means of communication suitable for transferring linear channels. Specifically, the means for broadcasting or distributing the channel can be preferably digital satellite or terrestrial means, or via cable, also preferably digital. However, the channel thus composed and aligned can be transmitted also via a fixed or mobile network, such as an Internet network with access via cable or via a cellular network, in which the channel is transmitted by broadcasting or multicasting. With reference to Figure 5, the method can optionally comprise the step S5 of off-line encoding the two units of content, in which the step is carried out before the channel composition information is generated or modified (the step of off-line encoding the two units of content is carried out prior to the step S10 described hereinabove). The off-line encoding step S5 is optional given that the method according to Figure 4 works in the same manner in the case in which the contents are made available already in an off-line encoded form, as long as the latter are made available before they are selected and/or received so as to then be aligned for the purposes of transmission.

Moreover, the off-line encoding is encoding suitable for encoding non-linear channels, but unsuitable for encoding live or almost real-time contents. In fact, to reach a high compression ratio, it is necessary to process the content thoroughly and in a detailed manner, for example by repeating a series of processes so as to locate the most suitable frame, on the basis of which the current frame can be predicted so as to achieve a high compression ratio without downgrading the quality. Owing to time constraints on the order of a fraction of a second or of a few seconds, on-line encodings are not suited to exploiting the full advantages of the encoding algorithms. In general, it can be said that encoding is considered to be off line when it would introduce a delay that is intolerable for live content, for example stripping it of the user's experience of live content and making it comparable to an event broadcast in playback or almost (consider the case in which a user is following a sports event in playback, delayed even only by 2 seconds with respect to users nearby, who are watching the same event on another channel encoded at a higher speed: the user discovers a goal has been made, not from the images delayed by 2 seconds, but from the cheering of the other users nearby). In some so-called almost real-time applications, the corresponding compression does not make it possible to reach the same levels of compression as in off-line encodings and it also does not permit an adequate level of quality control over the compressed signal. An advantageous off-line encoding according to the present invention is the encoding utilised to compress VOD contents.

The linear channel according to the present invention can be a channel not comprising live contents.

The method according to the second embodiment can optionally comprise the step of transmitting by broadcasting each one of the selected units of content at the corresponding point in time, that is, at the point in time indicated in the channel composition information. As described previously with reference to the first embodiment, broadcasting can be carried out by digital satellite or terrestrial means, via cable or via the Internet through fixed or mobile access (in which case, transmission may be by broadcasting or multicasting).

When the method described above or the variants thereof are applied to a first linear channel, the same method can optionally comprise a step of selecting, for a second linear channel that is different from the first linear channel, at least one additional unit of content based on corresponding live channel composition information. Unlike the units of content of the first linear channel, the additional unit of content is a unit of live content. In other words, the first linear channel is characterised by non-live units of content, whereas the second linear channel comprises at least one unit of live content. The live channel composition information thus comprises at least one live event such as a football game, a musical event or the news. The additional selected unit of content is then received in a subsequent step, for example by a unit suitable for composition of the channel. The additional unit of content selected and received by the entity for composition of the channel (e.g. the playout unit 10 as illustrated in Figure 3) is encoded by means of on-line encoding.

Therefore, according to this variant, for a first linear channel, the method comprises off-line encoding that is performed before the off-line encoded unit is selected and aligned on the channel and for a second linear channel, characterised in that it comprises at least one live content unit, on-line encoding performed after selection of the unit of content to be inserted in the second channel. In this manner, it is possible to make use of the advantages of the present invention as regards the composition of linear channels comprising only non-live contents with pre-existing systems, which instead take full advantage of the features for processing linear channels comprising live events. In particular, this variant of the method of the second embodiment enables application of off-line encoding, such as that typical of VOD non-linear channels, to linear channels not comprising live events, as well as on-line encoding for those linear channels that instead comprise at least one live event. According to an additional optional step, the method can comprise the step of transmitting by broadcasting (via cable, by satellite, terrestrial means, and via the Internet by broadcasting or multicasting) each one of the selected units for the first non-live linear channel and the units of content for the second linear channel comprising at least one live event. The contents of the first and the second channel can also be composed within the same stream of information, such as an MPEG stream, after having decomposed and multiplexed the units of content of the two linear channels into adequate packets.

Therefore, the method according to this variant can comprise the optional steps of multiplexing the first linear channel and the second linear channel, so as to obtain a transport stream, and transmitting the transport stream thus obtained.

The transport stream thus obtained is characterised by a set of packets (suitable for transport in a stream), in which each unit of content has been subdivided.

Therefore, the unit of content representing the smallest element or atom in the channel composition information (e.g. a playlist item) can be decomposed into packets, each comprising a limited quantity of information with respect to the quantity comprised in the unit of content, and each being supplied with control information needed to generate a transport stream for sending the packetised channel to the television viewer/user.

It is noted that as the units of content have been encoded off line prior to their selection and composition in the channel, they do not need to be encoded every time they are to be transmitted. Therefore, in the case in which a unit of content corresponding to a certain television programme needs to be retransmitted a number of times on the same channel or on different channels at the same time or at different points in time, it is necessary and sufficient to encode the same content off line only once and store it so that the content is accessible at different points in time. In the system shown in Figure 1, however, as the encoding process follows selection of the content, it is necessary to perform the encoding process on line every time the content is selected. Specifically, the encoding process must be performed also when it has already been performed previously for the same channel or for a different channel.

Moreover, in the method of the present embodiment, at least one of the units of content selected for the first linear channel had been encoded off line and transmitted previously on the same linear channel or on a different channel. The other channel may also be a linear channel or a non-linear channel such as a VOD channel for example. It follows that it is not necessary to perform encoding of the content, given that the encoding had already been carried out prior to the previous transmission. It is also possible to reutilise the contents already prepared for the VOD in the transmission of linear channels, which results in considerable savings in terms of time and storage resources, as well as processing.

According to a third embodiment, the present invention further comprises a computer program predisposed to execute, when the program is executed on a computer, one or more of the steps according to the method described above or one of the variants thereof. The computer on which this program can be executed should be understood as any computer, also including any computer realised in several units interconnected one to the other and that is capable of executing instructions programmed or predisposed for execution of the steps described above.

The instructions of the computer program may also be stored on an adequate medium, including for example a static memory, a fixed disk or any other media such as a CD, a DVD, or Blue Ray disk, or they can be transmitted on a carrier signal for execution on a remote entity.

Naturally, the description of embodiments and examples that apply the innovative principles of the invention, as recited hereinabove, is presented only by way of example of these principles and it should thus not be construed as a limitation of the scope of the invention set forth herein.

## Claims

1. A method for the composition of linear channels, a linear channel comprising at least two units of content, each unit of content comprising at least one among audio, video and data services, and wherein the point in time corresponding to the start of the transmission of each unit of content is predetermined based on the channel composition information, said method comprising the steps of:
- selecting (S10) at least two units of content based on said channel composition information;
- receiving (S20) said selected units of content from storing means, wherein each one of said units of content has been previously stored utilising off-line encoding;
- temporally aligning (S30), based on said channel composition information, said selected units of content so as to obtain the linear channel to be transmitted by broadcasting.

2. The method according to claim 1, comprising a step of off-line encoding (S5) of said at least two units of content, wherein said step of off-line encoding is carried out before the channel composition information is generated or modified.

3. The method according to claim 1, comprising a step of off-line encoding (S5) of said at least two units of content, wherein said step of off-line encoding is carried out prior to the selecting step (S10).

4. The method according to one of the preceding claims, wherein the off-line encoding is an encoding suitable for encoding non-linear channels, but not suitable for encoding live or almost real-time content.

5. The method according to one of the preceding claims, wherein the linear channel is a channel not comprising live content.

6. The method according to one of the preceding claims, comprising the additional step of:
- transmitting by broadcasting each one of said selected units of content at the corresponding said point in time.

7. The method according to one of the preceding claims, wherein said linear channel is a first linear channel, said method comprising the steps of:
- selecting, for a second linear channel that is different from said first linear channel, at least one additional unit of content based on corresponding live channel composition information;
- receiving said at least one additional selected unit of content;
- encoding said at least one additional selected unit of content by means of on-line encoding.

8. The method according to claim 7, comprising the steps of:
- multiplexing said first linear channel and said second linear channel so as to obtain a stream of transport;
- transmitting said stream of transport.

9. The method according to one of the preceding claims, wherein at least one of said two units of content had been encoded off line and transmitted previously on the same linear channel or on a different channel.

10. An entity for the composition of linear channels, a linear channel comprising at least two units of content, each unit of content comprising at least one among audio, video and data services, and wherein the point in time corresponding to the start of the transmission of each unit of content is predetermined based on the channel composition information (500), said entity comprising:
- selection means (100) configured so as to select at least two units of content (220, 221, 222) based on said channel composition information (500);
- receiving means (300) configured so as to receive said selected units of content (220, 221, 222) from storing means (400), wherein each one of said units of content (220, 221, 222) has been previously stored utilising off-line encoding (20', 21', 22');
- alignment means (300) configured so as to temporally align, based on said channel composition information (500), said selected units of content (220, 221, 222) so as to obtain the channel to be transmitted by broadcasting.

11. The entity for the composition of linear channels according to claim 10, comprising
- storing means (400) configured so as to store said selected units of content (220, 221, 222);
- off-line encoding means (20', 21', 22') configured so as to encode off line said units of content (220, 221, 222) and to send them to said storing means (400).

12. The entity for the composition of linear channels according to claim 10 or 11, wherein said linear channel is a first linear channel, said entity further comprising:
- live selection means (10) for selecting, for a second linear channel that is different from said first linear channel, at least one additional unit of content (1) based on corresponding live channel composition information (550);
- on-line encoding means (20) configured so as to encode said at least one additional selected unit of content (1) by means of on-line encoding.

13. A computer program predisposed to execute, when said program is executed on a computer, all the steps according to any one of claims 1 to 9.
